# EUROPEAN PATENT APPLICATION

(11) **EP 4 703 174 A1**
(43) Date of publication of application: **04.03.2026**
(21) Application number: 24197386.6
(22) Date of filing: 29.08.2024
(51) Int. Cl.: B60K 35/10, B60K 35/25, G06F 3/01, G06F 3/041

(54) **INPUT DEVICE OF OR FOR A VEHICLE FOR INPUTTING COMMANDS FOR TRIGGERING VEHICLE RE-LATED FUNCTIONS AND VEHICLE COMPRISING SUCH AN INPUT DEVICE**

(71) Applicant: HELLA GmbH & Co. KGaA, 59552 Lippstadt (DE)
(72) Inventor: Allouis, David, 49186 Bad Iburg (DE); Griebel, Jürgen, 79585 Steinen (DE); Lützelschwab, Simon, 79618 Rheinfelden (DE); Strohmeier, Jürgen, 79677 Tunau (DE)
(74) Representative: Behr-Wenning, Gregor

(57) **Abstract**

The present invention relates to an input device (10) of or for a vehicle (12) for inputting commands for triggering vehicle (12) functions, comprising a housing (14) enclosing a cavity (16), a vibration generating unit (26) arranged in the cavity (16), the vibration generating unit (26) comprising an exciter (28) for generating vibrations, an input panel (50) for inputting commands for triggering vehicle (12) functions by touching the input panel (50), wherein the vibration generating unit (26) is activated upon touching the input panel (50), the input panel (50) is supported in the input device (10) such that the vibrations generated by the vibration generating unit (26) are transferred to the input panel (50), thereby providing haptic feedback, and a decoupling unit (56) by which the vibration generating unit (26) is fastened to the housing (14), the decoupling unit (56) comprises a spiral spring (58) for decoupling the vibrations from the housing (14). Beyond that, the present invention relates to a vehicle (12), comprising such an input device (10).

## Description

The present invention relates to an input device of or for a vehicle for inputting commands for triggering vehicle related functions. Moreover, the present invention is drawn to a vehicle comprising such an input device.

### PRIOR ART

Modern vehicles are equipped with an increasing number of functions that are activatable by the vehicle passengers upon pressing a certain button or a functional surface. Commonly known examples of such functions are the opening and closing of windows and sunroofs and turning on and off reading lamps. In this regard, reference is made to US 2015/0115642 A1 and KR 2017/0022462 A.

To facilitate the locating of the buttons in the dark, the buttons are backlit and provided with symbols indicating the function that is triggered by pressing the respective button. Alternatively, or in addition, the buttons can have a particular shape and/or a surface treatment such that they can be located by haptic perception. A current trend is that the buttons are provided with haptic feedback indicating the passenger in a haptic way that a given button was correctly pressed. Whether or not the button has been correctly pressed may be defined by force exerted on the button. For this purpose, vibrations and/or impulses are generated by an exciter and introduced into the button when the button has been correctly pressed. These vibrations and impulses are perceptible by the passenger pressing the button. In the following, the invention is explained with reference to vibrations but largely works in the same way when impulses instead of vibrations are generated by the exciter.

The design of the exciter may be chosen such that the vibrating movement is only linear, only rotational or linear and rotational. The respective movements can be along and/or around any of the three spatial axes. To this end, the exciter may include a solenoid excitation motor having rotatable eccentric bodies.

For several reasons the movements, vibrations or impulses generated by the exciter need to be decoupled from vehicle components adjacently arranged to the input device. One reason is to protect the vehicle components from stress induced by movements, in particular the vibrations and impulses generated by the exciter as far as possible. Moreover, the vibrations of the vehicle components may lead to an unwanted noise generation and to an attenuation of the vibrations inside the input device. In the latter case, haptic feedback may be undefined and hardly perceptible to the passenger.

It is known to provide input devices with a decoupling unit by which the vibrations generated are decoupled from the housing and thus prevented from being transmitted to adjacently arranged vehicle components. The decoupling units are provided with dampening elements that absorb the vibrations and concomitantly prevent their transmission. A certain drawback is that the dampening elements need to be adjusted to the constructional space available in the input device and are therefore usually relatively expensive.

It is one task of one embodiment of the present invention to present an operating unit by which the drawbacks previously mentioned can at least be minimized. In particular, the operating unit should be produceable at lower costs.

Furthermore, an embodiment of the present invention has the object to provide a vehicle that can be equipped with such an input device.

The task is solved by the features specified in claims 1 and 13. Advantageous embodiments are the subject of the dependent claims.

According to one aspect of the present invention an input device of or for a vehicle for inputting commands for triggering vehicle related functions comprises
- a housing enclosing a cavity,
- a vibration generating unit arranged in the cavity, the vibration generating unit comprising an exciter for generating vibrations,
- an input panel for inputting commands for triggering vehicle related functions by touching the input panel, wherein
   ∘ the vibration generating unit is activated upon touching the input panel,
   ∘ the input panel is supported in the input device such that the vibrations generated by the vibration generating unit are transferred to the input panel, thereby providing haptic feedback, and
- a decoupling unit by which the vibration generating unit is fastened to the housing, the decoupling unit comprises a spiral spring for decoupling the vibrations from the housing.

One of the core ideas of the present invention is to employ spiral springs in the decoupling unit of an input device of or for a vehicle. Spiral springs are available in many dimensions, in particular in different working spring rates, lengths and diameters at low costs. Adjustments of the decoupling unit for example with respect to the dampening effect and to the dimensions can be conducted in an easy way.

According to another embodiment the input device comprises a reflector for distributing the vibrations generated by the exciter within the input device, wherein the spiral spring is arranged between the housing and the reflector. The exciter transfers its vibrations within a relatively small area. It may be possible to directly transmit the vibrations from the exciter to the input panel. However, the distribution of the vibrations may not be homogenous. With increasing distance from the contact area of the input panel and the exciter, the vibrations may attenuate. The design and the material of the reflector, however, is chosen such that a homogenous distribution of the vibrations within the input device is obtained at small attenuation. A direct contact between the input panel and the exciter is not necessary. The advantages of the use of a spiral spring previously discussed equally apply to this embodiment. It has been found that spiral springs offer an effective decoupling between the reflector and the housing.

According to another embodiment comprises a bezel fastened to the housing and surrounding the input panel. It may be necessary to provide a gap between the housing and the vibration generating unit or other components allowing the vibrating movement without transferring the same to the housing. Debris entering the gap may hinder or prevent the vibrating movement of the input panel or other components of the input device connected to the vibration generating unit and which follow the vibrating movement. The bezel may cover the gaps and thus prevent debris accumulating therein. Moreover, the bezel protects the input panel from exterior influences. Another aspect is that by means of the bezel the input device can be provided as a closed unit providing an electrostatic discharge zone. Electronic components of the input device are protected against electrostatic discharges.

In a further embodiment the spiral spring has an end opening and the housing, the bezel and/or the reflector has or have a pin that is protruding into the end opening. The housing and the reflector may be made by injection molding. A pin can be an integral part of the housing, the bezel and/or the reflector and thus directly been obtained by injection molding. It is not necessary to provide the pin by a separate part, thereby keeping the manufacturing effort low. The spiral spring can balance relative vibrating movements within the input device.

In another embodiment the housing and/or the reflector forms a receiving hole into which the spiral spring is introduced. Also in this case, the receiving hole can be integral to the housing and/or the reflector leading to a facilitated manufacturing.

A further embodiment requires that the spiral spring defines a central axis in the relaxed state, the spiral spring being bent relative to the central axis by a bending angle when mounted to the input device. Usually, spiral springs are loaded by tensile forces and/or compressive forces acting along or parallel to the central axis. However, in this embodiment, the spiral spring is mounted to the input device such that it is bent by a bending angle relative to the central axis. The spiral spring has the tendency to return into a straight position, thereby generating a restoring torque or restoring force. This restoring torque and/or the restoring force are used for the decoupling. As it is not necessary to arrange the spiral spring such that it is axially loaded, the spiral spring can be mounted inside the input device in a flexible and space-saving way.

In a further embodiment the spiral spring is arranged between the reflector and the bezel. As mentioned, the bezel is surrounding the input panel and thus exposed to the exterior of the input device. A passenger of the vehicle may also contact the bezel when pressing the input panel. The arrangement of the spiral spring between the bezel and the reflector leads to a clearly defined decoupling between the bezel and the remaining components following the vibrating movements. Haptic feedback is provided in a defined and unambiguous way.

In another embodiment the housing forms at least one abutment section and the spiral spring pretensions the bezel into an end position in which the bezel abuts against the abutment section. As mentioned, it may be necessary to provide a gap between the stationary and the movable components of the input device, in particular between the bezel and the input panel. In this embodiment the end position of the bezel can be clearly defined and be chosen such that a gap of the desired size can be formed between the bezel and the input panel. Instead of the housing, the abutment sections may also be formed by separate parts fastened to the housing in a way that the end position is clearly definable.

According to another embodiment the input device comprises at least one light guide arranged in the cavity for guiding light generated by a light source to the input panel for illuminating the same. The illumination of the input panel facilitates the operation in the dark and can be part of the light design of the passenger compartment. The use of the light guide offers the advantage that the light source can be arranged remote from the input device such that no space is needed for the light source. Alternatively, the light source can be placed inside the input device in areas where there is sufficient available constructional space. Consequently, the vibration generating unit can be arranged with a higher degree of freedom within the input device, thereby improving the transmission of the vibrations to the entire input panel. The input device may also be more compact compared to input devices known from the prior art such that resources and constructional space are saved.

In a further embodiment the light guide comprises one or more inserting units for coupling light into the light guide, and the light source comprises one or more light-emitting diodes (LEDs) adjacently arranged to the inserting units and arranged on a printed circuit board that is fastened to the housing. LEDs are compact and energy saving electronical components. When for example RGB-LEDs are used the light emitted by the light source can be provided with different colors depending on the gamut of the RGB-LEDs. The inserting units of the light guide are adjacently arranged to the LEDs such that almost no emitted light gets lost. The input panel can thus be illuminated with a high brightness.

According to another embodiment the reflector comprises a contact section in which the reflector is contacting the exciter, wherein the exciter and the contact section are arranged in or near the center of the input device. The arrangement of the exciter and the contact section between the exciter and the reflector leads to a very homogenous distribution of the vibrations within the input device. The closer to the center the arrangement of the exciter and the contact section, the more homogeneous is the distribution of the vibrations.

A further embodiment requires that the input device is embodied arranged in the overhead console, the center console, the instrument panel (sometimes also referred to as dashboard) and/or the armrest of a vehicle. The overhead console, the center console, the instrument panel and the armrest are typical locations where buttons for triggering certain vehicle related functions are found. However, the input device may also be arranged in other locations of the passenger compartment of the vehicle. The vehicle passengers are thus used to find the buttons in these locations so that this arrangement considers the intuition of the vehicle passengers and increases the acceptance of the input device.

Another aspect of the invention is directed towards a vehicle, comprising an input device according to one of the embodiments previously presented. The technical effects and advantages as discussed about the present input device equally mostly apply to the vehicle. Briefly, the vehicle can be provided with an input device that can be illuminated and concomitantly provides haptic feedback. The input device takes up only a small constructional space and can be flexibly adjusted to different configurations of the vehicle.

### PREFERRED EMBODIMENTS OF THE INVENTION

- Figure 1A: is an exploded view of an embodiment of an input device according to the present invention,
- Figure 1B: is a partial perspective view of the input device shown in Figure 1A in the mounted state,
- Figure 1C: is a partial cross-sectional view through the input device shown in Figure 1A in the mounted state, and
- Figure 2: is a principle top view of a vehicle being equipped with a plurality of input devices according to the present invention.

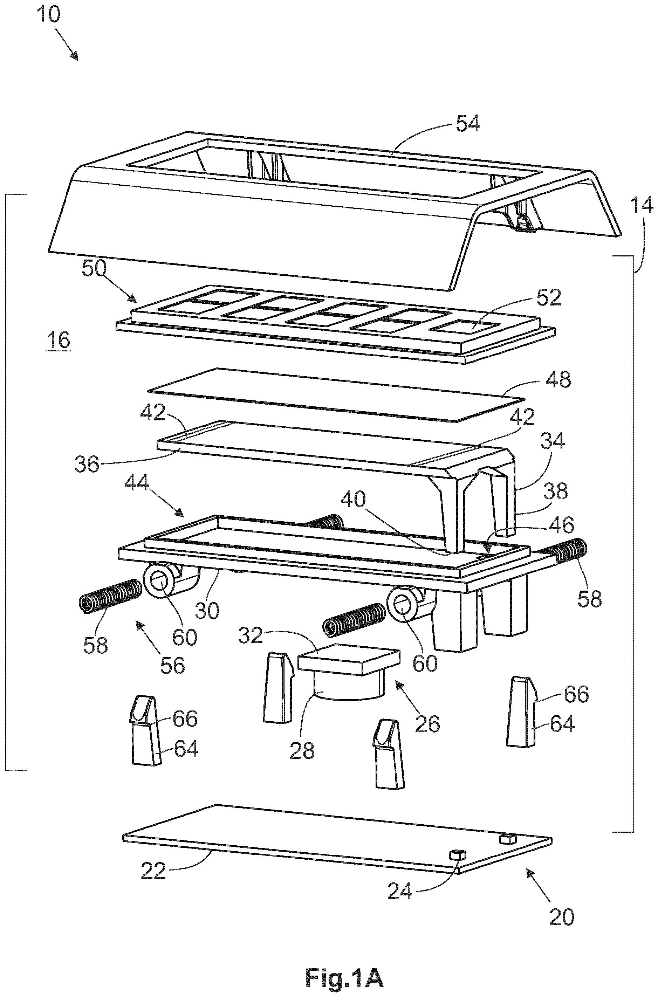

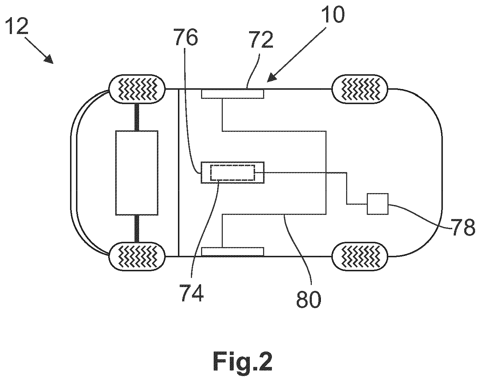

Figure 1A to 1C show an embodiment of an input device 10 according to the present invention that can be used in a vehicle 12 (see Figure 2). As will be explained later in greater detail, vehicle related functions can be triggered by the input device 10. The input device 10 comprises a housing 14 that in Figure 1A is represented in a simplified way for the sake of clarity. The housing 14 encloses a cavity 16. A light source 20 is fastened to the housing 14 in a way not explicitly shown. However, fastening means like screws may be used for this purpose. The light source 20 comprises a printed circuit board 22 on which two light-emitting diodes (LEDs) 24 are arranged.

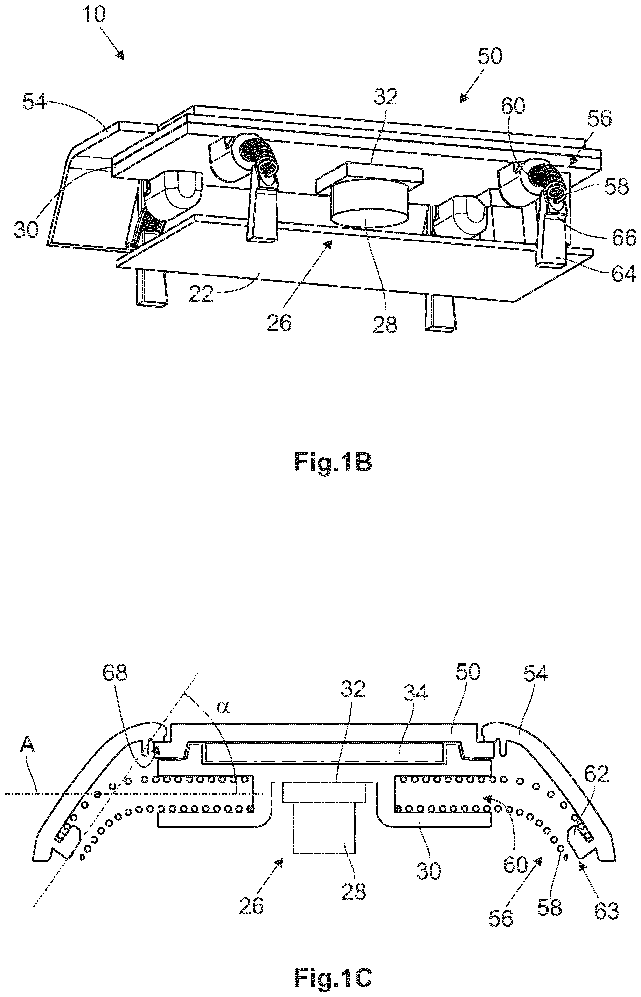

The input device 10 is equipped with a vibration generating unit 26 which includes an exciter 28 by which vibrations or impulses can be generated. As evident from Figure 1B, the exciter 28 is connected to a reflector 30 which distributes the vibrations throughout the input device 10. The connection between the exciter 28 and the reflector 30 is realized in a contact section 32.

With reference in particular to Figure 1A, a light guide 34 is provided that can be fastened to the reflector 30. The light guide 34 has a first section 36 and a second section 38 that are arranged perpendicular to each other so that the light guide 34 has an L-formation. The second section 38 is forming two inserting units 40 in which the light emitted by the two LEDs 24 can be coupled into the light guide 34. A plurality of exiting units 42 is provided on the first section 36 where the light can leave the light guide 34. For the sake of clarity only some of the exiting units 42 are shown in a simplified way. The exiting units 42 may be embodied as scratches or recesses located on the surface of the first section 36. Other surface modifications may also be used.

For fastening the light guide 34 to the reflector 30, the reflector 30 is provided with a support section 44 into which the first section 36 of the light guide 34 can be introduced. The reflector 30 forms a passage opening 46 through which the second section 38 of the light guide 34 can be guided. In the mounted state the inserting units 40 are placed adjacent to the two LEDs 24.

A touch foil 48 is applied to the first section 36 of the light guide 34. Beyond that, an input panel 50 is arranged adjacent to the light guide 34 and the touch foil 48 and fastened to the reflector 30. The light guide 34 is sandwiched between the input panel 50 and the reflector 30. The input panel 50 is provided with button-like sections 52 which can be pressed by a passenger of a vehicle 12. The button-like sections 52 may be provided with symbols (not shown) that are associated with a vehicle related function that is triggered when the respective button-like section 52 is pressed.

A bezel 54 is fastened to the housing 14 and has a trough-like shape. In the mounted state, the bezel 54 is enclosing the input panel 50. The input device 10 is further equipped with a decoupling unit 56. The decoupling unit 56 comprises in total four spiral springs 58 that can be introduced into receiving holes 60 formed by the reflector 30. As particularly evident from Figure 1C, the bezel 54 forms a pin 62 that is introduced into an end opening 63 of the spiral spring 58. The pins 62 and the receiving holes 60 are arranged such that the spiral spring 58 is bent by a bending angle α with reference to its central axis A in the mounted state of the input device 10. The bending results in a restoring force directed to the central axis A and is transmitted to the bezel 54. With reference to Figure 1C, the returning force is moving the bezel 54 upwardly.

In the embodiment shown, the bending angle α is approximately 55°, however, the bending angle α can be largely freely chosen in particular in consideration of the returning force that should be exerted on the bezel 54.

Referring to Figures 1A and 1B the housing 14 forms four hook-like protrusions 64 that define abutment sections 66 against which the bezel 54 abuts. The returning force of the spiral spring 58 is directed such that the bezel 54 is pressed against the abutment sections 66 thereby biasing the bezel 54 into an end position in which a small gap 68 is formed between the bezel 54 and the input panel 50 (see Figure 1C).

The decoupling unit 56 separates the housing 14 from the reflector 30 and the parts fastened to the reflector 30, i.e., the light guide 34, the touch foil 48, the input panel 50 and the vibration generating unit 26.

As particularly evident from Figure 1B, the contact section 32 in which the exciter 28 contacts the light guide 34 is centrally arranged within the input device 10. The same is true for the exciter 28 itself. This arrangement leads to a very homogeneous distribution of the vibrations within the input device 10.

The input device 10 may be operated as follows. When the passenger of a vehicle 12 that is equipped with such an input device 10 wants to trigger a certain vehicle related function, he touches the input panel 50 at the button-like section 52 (Figure 1A) that is associated with the function and exerts a certain pressure on the input panel 50. This pressure is transmitted to the touch foil 48 which creates a certain current in the button-like section 52 or the button-like area 70, respectively. This current is used to trigger the associated function and to activate the exciter 28. The passenger gets immediate haptic feedback when the function has been successfully triggered. When no haptic feedback is provided, the passenger knows that his attempt to trigger the function was not successful and he may have to try again.

Figure 2 is a principle top view on a vehicle 12 that is provided with input devices 10 for example according to the embodiment previously presented. The input devices 10 may be arranged in an armrest 72, a center console 74 and/or in the overhead console 76 of the vehicle 12. An arrangement in other locations inside the passenger compartment of the vehicle 12 is also possible. The input devices 10 are connected to a control unit 78 by electrical wires 80. As mentioned, a current is produced when the passenger presses the input device 10 to trigger a certain vehicle related function. This current is transmitted to the control unit 78 which then procures the execution of the respective function.

### REFERENCE LIST

- 10: input device
- 12: vehicle
- 14: housing
- 16: cavity
- 20: light source
- 22: printed circuit board
- 24: LEDs
- 26: vibration generating unit
- 28: exciter
- 30: reflector
- 32: contact section
- 34: light guide
- 36: first section
- 38: second section
- 40: inserting unit
- 42: exiting unit
- 44: support section
- 46: passage opening
- 48: touch foil
- 50: input panel
- 52: button-like section
- 54: bezel
- 56: decoupling unit
- 58: spiral spring
- 60: receiving hole
- 62: pin
- 63: end opening
- 64: protrusion
- 66: abutment section
- 68: gap
- 72: armrest
- 74: center console
- 76: overhead console
- 78: control unit
- 80: wires

- A: central axis
- α: bending angle

## Claims

1. Input device (10) of or for a vehicle (12) for inputting commands for triggering vehicle (12) functions, comprising
- a housing (14) enclosing a cavity (16),
- a vibration generating unit (26) arranged in the cavity (16), the vibration generating unit (26) comprising an exciter (28) for generating vibrations,
- an input panel (50) for inputting commands for triggering vehicle (12) functions by touching the input panel (50), wherein
∘ the vibration generating unit (26) is activated upon touching the input panel (50),
∘ the input panel (50) is supported in the input device (10) such that the vibrations generated by the vibration generating unit (26) are transferred to the input panel (50), thereby providing haptic feedback, and
- a decoupling unit (56) by which the vibration generating unit (26) is fastened to the housing (14), the decoupling unit (56) comprises a spiral spring (58) for decoupling the vibrations from the housing (14).

2. Input device (10) according to claim 1,
**characterized in that** the input device (10) comprises a reflector (30) for distributing the vibrations generated by the exciter (28) within the input device (10), wherein the spiral spring (58) is arranged between the housing (14) and the reflector (30).

3. Input device (10) according to one of the preceding claims,
**characterized in that** the input device (10) comprises a bezel (54) fastened to the housing (14) and surrounding the input panel (50).

4. Input device (10) according to one of the preceding claims,
**characterized in that**
- the spiral spring (58) has an end opening (63) and
- the housing (14), the bezel (54) and/or the reflector (30) has a pin (62) that is protruding into the end opening (63).

5. Input device (10) according to one of the preceding claims,
**characterized in that** the housing (14) and/or the reflector (30) forms a receiving hole (60) into which the spiral spring (58) is introduced.

6. Input device (10) according to one of the preceding claims,
**characterized in that** the spiral spring (58) defines a central axis in the relaxed state, the spiral spring (58) being bent relative to the central axis by a bending angle when mounted to the input device (10).

7. Input device (10) according to claim 6,
**characterized in that** the spiral spring (58) is arranged between the reflector (30) and the bezel (54).

8. Input device (10) according to one of the claims 6 or 7,
**characterized in that** the housing (14) forms at least one abutment section (66) and the spiral spring (58) pretensions the bezel (54) into an end position in which the bezel (54) abuts against the abutment section (66).

9. Input device (10) according to one of the preceding claims,
**characterized in that** the input device (10) comprises at least one light guide (34) arranged in the cavity (16) for guiding light generated by a light source (20) to the input panel (50) for illuminating the same.

10. Input device (10) according to claim 9,
**characterized in that** the light guide (34) comprises one or more inserting units (40) for coupling light into the light guide (34), and the light source (20) comprises one or more light-emitting diodes (24) adjacently arranged to the inserting units (40) and arranged on a printed circuit board (22) that is fastened to the housing (14).

11. Input device (10) according to claim 1 and one of the claims 3 to 10,
**characterized in that** the reflector (30) comprises a contact section (32) in which the reflector (30) is contacting the exciter (28), wherein the exciter (28) and the contact section (32) are arranged in or near the center of the input device (10).

12. Input device (10) according to one of the preceding claims,
**characterized in that** the input device (10) is arranged in the overhead console (76), the center console (74), the instrument panel and/or the armrest (72) of a vehicle (12).

13. Vehicle (12), comprising an input device (10) according to one of the preceding claims.
